# EUROPEAN PATENT APPLICATION

(11) **EP 2 744 220 A1**
(43) Date of publication of application: **18.06.2014**
(21) Application number: 12823671.8
(22) Date of filing: 26.07.2012
(51) Int. Cl.: H04N 21/4627

(54) **SET TOP BOX AUTHENTICATION METHOD AND DEVICE**

(30) Priority: 12.08.2011 CN 201110231518
(71) Applicant: Huawei Device Co., Ltd., Longgang District Shenzhen Guangdong 518129 (CN)
(72) Inventor: LIU, Chen, Shenzhen Guangdong 518129 (CN)
(74) Representative: Barth, Stephan Manuel
(86) International application number: PCT/CN2012/079201
(87) International publication number: WO 2013/023519

(57) **Abstract**

Embodiments of the present invention provide a set-top box authentication method and apparatus, relate to the field of digital television communications, realize the process of authentication and authorization for a primary set-top box and an auxiliary set-top box, and solve the problem that the reliability of the authentication and authorization process for the primary set-top box and the auxiliary set-top box is low. The method includes: first, receiving, by a first set-top box, through a wireless communications network, identification information of a second set-top box, which is sent by the second set-top box; then, searching, by the first set-top box, identification information of all set-top box information prestored in the first set-top box to determine whether a target set-top box consistent with the identification information of the second set-top box exists; and finally, when the target set-top box exists, confirming, by the first set-top box, that the authentication of the second set-top box is successful. The present invention is applicable to the field of digital television communications.

## Description

### CROSS-REFERENCE TO RELATED APPLICATION

This application claims priority to Chinese Patent Application No. 201110231518.2, filed with Chinese Patent Office on August 12, 2011 and entitled "SET-TOP BOX AUTHENTICATION METHOD AND APPARATUS", which is incorporated herein by reference in its entirety.

### TECHNICAL FIELD

The present invention relates to the field of digital television communications, and in particular, to a set-top box authentication method and apparatus.

### BACKGROUND

The charging of a digital television is implemented through conditionally accessing a CA (Certificate Authority, CA is an entity on which both communication sides rely and is termed a reliable third party) system. An operator mainly adopts an intelligent card authorization manner to perform encryption and authorization for terminal users in a plurality of actually running CA systems.

In the prior art, a main method for authenticating a primary set-top box and an auxiliary set-top box in an intelligent card authorization manner includes: intelligent card information of the auxiliary set-top box is sent to the primary set-top box; after the auxiliary set-top box runs for a specific time period, a user needs to take out the intelligent card from the auxiliary set-top box and insert it in an intelligent card slot of the primary set-top box; after the primary set-top box reads the intelligent card information of the auxiliary set-top box, authorization for an intelligent card of the auxiliary set-top box is performed; and after the authorization is complete, the intelligent card of the auxiliary set-top box is inserted back into the auxiliary set-top box for further use. This manner requires the user to authenticate the intelligent card of the auxiliary set-top box and the primary set-top box again after a period of time; and if the auxiliary set-top box of the user is used in another household, the auxiliary set-top box will cannot work normally after a period of time.

Although in the prior art, the primary set-top box and the auxiliary set-top box are authorized and authenticated during working, if the auxiliary set-top box is moved to another place, the auxiliary set-top box may be used as a primary set-top box at a current location only after authentication and authorization for the intelligent card of the auxiliary set-top box and a set-top box at the current location are performed once, so that the reliability of the authentication and authorization for the primary set-top box and the auxiliary set-top box is low.

### SUMMARY

Embodiments of the present invention provide a set-top box authentication method and apparatus, so as to complete the process of authentication and authorization for a primary set-top box and an auxiliary set-top box and solve the problem that the reliability of the authentication and authorization process for the primary set-top box and the auxiliary set-top box is low. The technical solutions adopted in the embodiments of the present invention are as follows:

A set-top box authentication method includes:
receiving, by a first set-top box, through a wireless communications network, identification information of a second set-top box, which is sent by the second set-top box;
searching, by the first set-top box, identification information of all set-top box information prestored in the first set-top box to determine whether a target set-top box consistent with the identification information of the second set-top box exists; and
when the target set-top box exists, confirming, by the first set-top box, that the authentication of the second set-top box is successful.

A set-top box includes:
a first receiving unit, configured to receive, through a wireless communications network, identification information of a second set-top box, which is sent by the second set-top box;
a searching unit, configured to search identification information of all set-top box information prestored in the first set-top box to determine whether a target set-top box consistent with the identification information of the second set-top box exists; and
a confirming unit, configured to: when the target set-top box exists, confirm that the authentication of the second set-top box is successful.

In the set-top box authentication method and apparatus that are provided by the embodiments of the present invention, first, a first set-top box receives, through a wireless communications network, identification information of a second set-top box, which is sent by the second set-top box; then, the first set-top box searches identification information of all set-top box information prestored in the first set-top box to determine whether a target set-top box consistent with the identification information of the second set-top box exists; and finally, when the target set-top box exists, the first set-top box confirms that the authentication of the second set-top box is successful. In the prior art, although the authentication between a primary set-top box and an auxiliary set-top box can be implemented, the reliability of authentication and authorization is low, while by sending heartbeat information periodically through the wireless communications network, the embodiments of the present invention realize the authentication and authorization between the primary set-top box and the auxiliary set-top box, and at the same time, improve the reliability of the authentication and authorization between the primary set-top box and the auxiliary set-top box.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a set-top box authentication method according to Embodiment 1 of the present invention;
FIG. 2 is a schematic structural diagram of a set-top box authentication apparatus according to Embodiment 1 of the present invention;
FIG. 3 is a flowchart of a set-top box authentication method according to Embodiment 2 of the present invention;
FIG. 4 is a flowchart of another set-top box authentication method according to Embodiment 2 of the present invention; and
FIG. 5 is a schematic structural diagram of a set-top box authentication apparatus according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

To make the advantages of the technical solutions of the present invention more comprehensible, the following describes the present invention in detail with reference to the accompanying drawings and embodiments.

### Embodiment 1

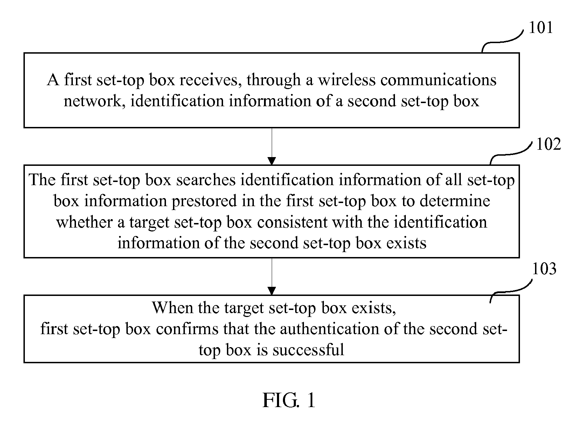

This embodiment provides a set-top box authentication method. As shown in FIG. 1, the method includes the following.

101: A first set-top box receives, through a wireless communications network, identification information of a second set-top box, which is sent by the second set-top box.

If a digital television set-top box needs to implement functions of receiving digital television code stream signals, decoding digital television code stream signals, and outputting and displaying digital television signals, the digital television set-top box at least has modules for implementing the foregoing three functions, and also has a central processing unit CPU, a storage unit, a remote-control processing module, a power supply processing module, and other auxiliary functional modules.

The set-top box according to the embodiment of the present invention is equipped with a wireless communications module, such as an RF module (radio frequency module) in a 2.5 G frequency band or other frequency bands. Different set-top boxes in one household may be communicated through the wireless communications module, and a typical distance is 10-50 m.

Functional modules of the set-top box include a digital code stream signal receiving module, which mainly receives digital television signals transmitted from wired equipment/satellite/ground/IP. The digital television signals must be processed correspondingly according to different transmission networks before being transmitted at a front end, for example, for a wired television network, QAM (Quadrature Amplitude Modulation) needs to be performed for a code stream according to actual network conditions at a transmission front end, and then the code stream is modulated to a certain fixed frequency for transmission. Therefore, the digital code stream signal receiving module implements tuning and demodulating reception processing on received digital television signals.

The functional modules of the set-top box further include a digital code stream signal decoding module, where the digital code stream signal decoding module mainly decodes digital television signals. The digital television signals are compressed before transmission and the digital television set-top box is responsible for decompression and decoding to restore the signals. The digital code stream signal decoding module is a core processing module of the digital television set-top box.

The functional modules of the set-top box further include a digital signal outputting module, where the digital signal outputting module processes decoded video and audio signals and then outputting the processed signals to a television or other displaying terminals.

The central processing unit is a programming control module of the entire system and runs corresponding program instructions to develop various applications. The basic functions of the central processing unit include parsing various pieces of information sent in a digital code stream signal to realize functions of an electronic program guide (EPG), a program list, and so on, and further expand to realize functions of net surfing and games.

The storage unit is mainly used in combination with the central processing unit.

A remote-control processing unit is responsible for receiving control signals input by a user using a remote-controller.

A power module is responsible for the power supply of the set-top box.

The wireless communications module is a newly added wireless processing module, which is responsible for short-distance wireless RF signal reception, such as an RF signal in a 2.5 G frequency band or other frequency bands. Set-top boxes in one household may be communicated through the wireless communications module, a typical distance is 10-50 m, and a common technology is, for example, WIFI, and the like. The module is capable of implementing networking communications of household equipment and transmitting data information.

The identification information may be transmitted along with digital code stream signals through a network, and the identification information may be a MAC address of an RF module in the set-top box, a serial number of the set-top box, an ID of a main chip of the set-top box, an intelligent card number, and the like.

102: The first set-top box searches identification information of all set-top box information prestored in the first set-top box to determine whether a target set-top box consistent with the identification information of the second set-top box exists.

103: When the target set-top box exists, the first set-top box confirms that the authentication of the second set-top box is successful.

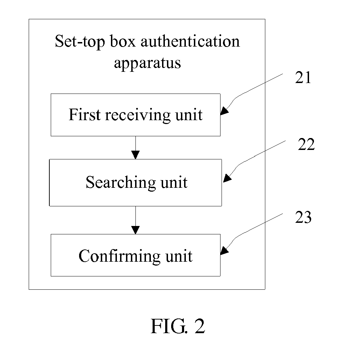

This embodiment provides a set-top box. As shown in FIG. 2, the set-top box includes: a first receiving unit 21, a searching unit 22, and a confirming unit 23.

The first receiving unit 21 is configured to receive, through a wireless communications network, identification information of a second set-top box, which is sent by the second set-top box.

If a digital television set-top box needs to implement functions of receiving digital television code stream signals, decoding digital television code stream signals, and outputting and displaying digital television signals, the digital television set-top box at least has modules for implementing the foregoing three functions, and also has a central processing unit CPU, a storage unit, a remote-control processing module, a power supply processing module, and other auxiliary functional modules.

The set-top box according to the embodiment of the present invention is equipped with a wireless communications module, such as an RF module (radio frequency module) in a 2.5 G frequency band or other frequency bands. Different set-top boxes in one household may be communicated through the wireless communications module, and a typical distance is 10-50 m.

Functional modules of the set-top box include a digital code stream signal receiving module, which mainly receives digital television signals transmitted from wired equipment/satellite/ground/IP. The digital television signals must be processed correspondingly according to different transmission networks before being transmitted at a front end, for example, for a wired television network, QAM (Quadrature Amplitude Modulation) needs to be performed for a code stream according to actual network conditions at a transmission front end, and then the code stream is modulated to a certain fixed frequency for transmission. Therefore, the digital code stream signal receiving module implements tuning and demodulating reception processing on received digital television signals.

The functional modules of the set-top box further include a digital code stream signal decoding module, where the digital code stream signal decoding module mainly decodes digital television signals. The digital television signals are compressed before transmission and the digital television set-top box is responsible for decompression and decoding to restore the signals. The digital code stream signal decoding module is a core processing module of the digital television set-top box.

The functional modules of the set-top box further include a digital signal outputting module, where the digital signal outputting module processes decoded video and audio signals and then outputting the processed signals to a television or other displaying terminals.

The central processing unit is a programming control module of the entire system and runs corresponding program instructions to develop various applications. The basic functions of the central processing unit include parsing various pieces of information sent in a digital code stream signal to realize functions of an electronic program guide (EPG), a program list, and so on, and further expand to realize functions of net surfing and games.

The storage unit is mainly used in combination with the central processing unit.

The remote-control processing unit is responsible for receiving control signals input by a user using a remote-controller.

The power module is responsible for the power supply of the set-top box.

The wireless communications module is a newly added wireless processing module, which is responsible for short-distance wireless RF signal reception, such as an RF signal in a 2.5 G frequency band or other frequency bands. Set-top boxes in one household may be communicated through the wireless communications module, a typical distance is 10-50 m, and a common technology is, for example, WIFI, and the like. The module is capable of implementing networking communications of household equipment and transmitting data information.

The identification information may be transmitted along with digital code stream signals through a network, and the identification information may be a MAC address of an RF module in the set-top box, a serial number of the set-top box, an ID of a main chip of the set-top box, an intelligent card number, and the like.

The searching unit 22 is configured to search identification information of all set-top box information prestored in the first set-top box to determine whether a target set-top box consistent with the identification information of the second set-top box exists.

The confirming unit 23 is configured to: when the target set-top box exists, the first set-top box to confirm that the authentication of the second set-top box is successful.

In the set-top box authentication method and apparatus that are provided by the embodiment of the present invention, first, a first set-top box receives, through a wireless communications network, identification information of a second set-top box, which is sent by the second set-top box; then, the first set-top box searches identification information of all set-top box information prestored in the first set-top box to determine whether a target set-top box consistent with the identification information of the second set-top box exists; and finally, when the target set-top box exists, the first set-top box confirms that the authentication of the second set-top box is successful. In the prior art, although the authentication between a primary set-top box and an auxiliary set-top box can be implemented, the reliability of authentication and authorization is low, while by sending heartbeat information periodically through the wireless communications network, the embodiments of the present invention realize the authentication and authorization between the primary set-top box and the auxiliary set-top box, and at the same time, improve the reliability of the authentication and authorization between the primary set-top box and the auxiliary set-top box.

### Embodiment 2

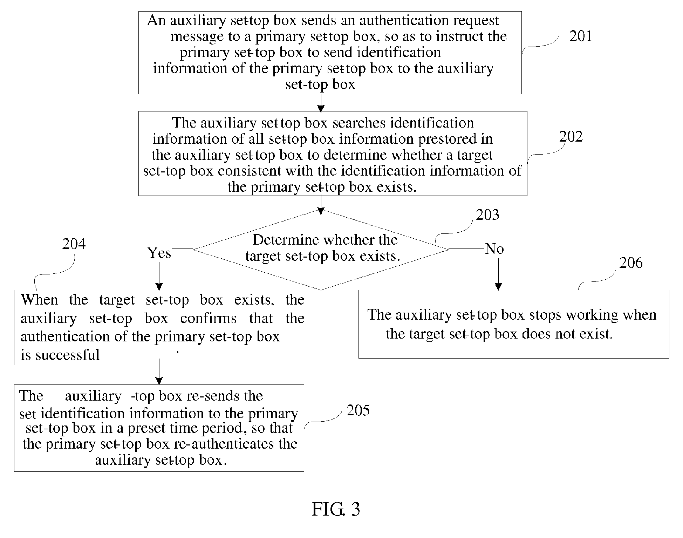

This embodiment provides a set-top box authentication method. As shown in FIG. 3, the method includes the following.

201: An auxiliary set-top box sends an authentication request message to a primary set-top box so as to instruct the primary set-top box to send identification information of the primary set-top box to the auxiliary set-top box. In this embodiment, the auxiliary set-top box may regularly send authentication request messages, and the auxiliary set-top box may receive the identification information of the primary set-top box, which is sent by the primary set-top box, in different time periods.

Request message includes but is no limited to identification information of a set-top box, which is capable of uniquely identifying the set-top box, such as a MAC address of an RF module, a serial number of the set-top box, an ID of a main chip of the set-top box, an intelligent card number, and the like. The identification information is sent to a primary set-top box for registration.

202: The auxiliary set-top box searches identification information of all set-top box information prestored in the auxiliary set-top box to determine whether a target set-top box consistent with the identification information of the primary set-top box exists.

203: Determine whether the target set-top box exists.

204: When the target set-top box exists, the auxiliary set-top box confirms that the authentication of the primary set-top box is successful.

205: The auxiliary set-top box re-sends the identification information to the primary set-top box in a preset time period, so that the primary set-top box re-authenticates the auxiliary set-top box.

In this embodiment, the auxiliary set-top box may re-send the identification information to the primary set-top box in a heartbeat manner. Meanwhile, the auxiliary set-top box needs to regularly send heartbeat information to the primary set-top box to perform a circulating step for identification verification. In case of unsuccessful authorization (that is, the second authorization is unsuccessful), it is regarded that wireless communications between the primary set-top box and the auxiliary set-top box cannot be formed, a distance between the primary set-top box and the auxiliary set-top box exceeds the range of a household, and the auxiliary set-top box stops working.

206: The auxiliary set-top box stops working when the target set-top box does not exist.

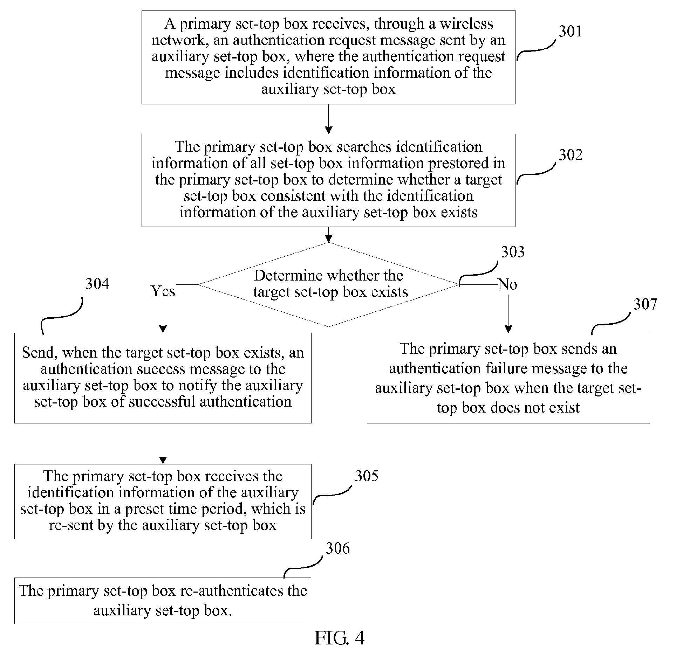

This embodiment provides another set-top box authentication method. As shown in FIG. 4, the method includes the following.

301: A primary set-top box receives, through a wireless network, an authentication request message sent by an auxiliary set-top box, where the authentication request message includes identification information of the auxiliary set-top box.

302: The primary set-top box searches identification information of all set-top box information prestored in the primary set-top box to determine whether a target set-top box consistent with the identification information of the auxiliary set-top box exists.

303: Determine whether the target set-top box exists.

304: Send, when the target set-top box exists, an authentication success message to the auxiliary set-top box to notify the auxiliary set-top box of successful authentication and enable the auxiliary set-top box to start working according to the message.

305: The primary set-top box receives the identification information of the auxiliary set-top box in a preset time period, which is re-sent by the auxiliary set-top box.

306: The primary set-top box re-authenticates the auxiliary set-top box.

In this embodiment, heartbeat information is sent regularly to enable the primary set-top box to authenticate the auxiliary set-top box in a circulating manner. In case of unsuccessful authorization (that is, the second authorization is unsuccessful), it is regarded that wireless communications between the primary set-top box and the auxiliary set-top box cannot be formed, a distance between the primary set-top box and the auxiliary set-top box exceeds the range of a household, and the auxiliary set-top box stops working.

307: The primary set-top box sends an authentication failure message to the auxiliary set-top box when the target set-top box does not exist.

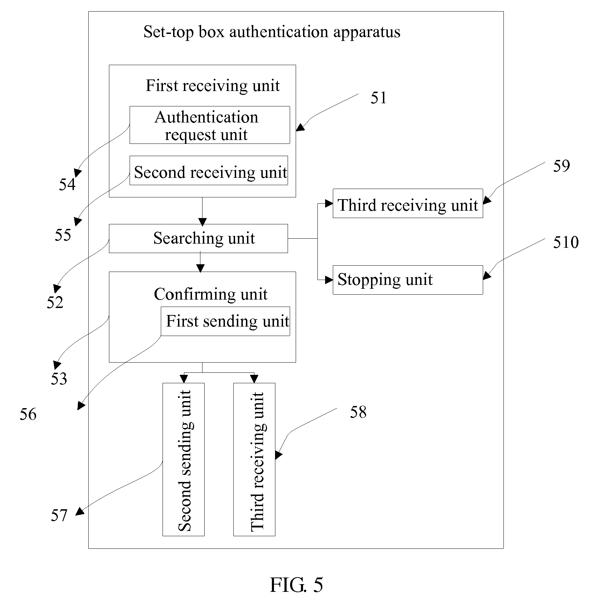

This embodiment further provides a set-top box. As shown in FIG. 5, the set-top box includes a first receiving unit 51, a searching unit 52, a confirming unit 53, an authentication request unit 54, a second receiving unit 55, a first sending unit 56, a second sending unit 57, a third receiving unit 58, a third sending unit 59, and a stopping unit 510.

The first receiving unit 51 is configured to receive, through a wireless communications network, identification information of a second set-top box, which is sent by the second set-top box.

The searching unit 52 is configured to search identification information of all set-top box information prestored in a first set-top box to determine whether a target set-top box consistent with the identification information of the second set-top box exists.

The confirming unit 53 is configured to: when the target set-top box exists, confirm that the authentication of the second set-top box is successful.

The authentication request unit 54 is configured for the first set-top box to send an authentication request message to the second set-top box so as to instruct the second set-top box to send the identification information of the second set-top box to the first set-top box.

The second receiving unit 55 is configured for the first set-top box to receive, through a wireless network, an authentication request message sent by the second set-top box, where the authentication request message includes the identification information of the second set-top box.

The first sending unit 56 is configured to send, when the target set-top box exists, an authentication success message to the second set-top box to notify the second set-top box of successful authentication.

The second sending unit 57 is configured to re-send, by the first set-top box, the identification information to the second set-top box in a preset time period when the first set-top box is an auxiliary set-top box.

The third receiving unit 58 is configured to receive, when the first set-top box is a primary set-top box, by the first set-top box, the identification information of the second set-top box in a preset time period, which is re-sent by the second set-top box.

The third sending unit 59 is configured to send, when the first set-top box is a primary set-top box and the target set-top box does not exist, an authentication failure message to the second set-top box.

The stopping unit 510 is configured for the first set-top box to stop working when the first set-top box is an auxiliary set-top box and the target set-top box does not exist.

In the set-top box authentication method and apparatus that are provided by the embodiment of the present invention, first, a first set-top box receives, through a wireless communications network, identification information of a second set-top box, which is sent by the second set-top box; then, the first set-top box searches identification information of all set-top box information prestored in the first set-top box to determine whether a target set-top box consistent with the identification information of the second set-top box exists; and finally, when the target set-top box exists, the first set-top box confirms that the authentication of the second set-top box is successful. In the prior art, although the authentication between a primary set-top box and an auxiliary set-top box can be implemented, the reliability of authentication and authorization is low, while by sending heartbeat information periodically through the wireless communications network, the embodiments of the present invention realize the authentication and authorization between the primary set-top box and the auxiliary set-top box, and at the same time, improve the reliability of the authentication and authorization between the primary set-top box and the auxiliary set-top box.

The set-top box authentication apparatuses provided by the embodiments of the present invention can implement the embodiments of the foregoing set-top box authentication method. For specific function implementation, refer to the descriptions in the method embodiments, which will not be detailed herein. The set-top box authentication methods and apparatuses that are provided by the embodiments of the present invention are applicable to, but are not limited to, the field of digital television communications.

A person of ordinary skill in the art may understand that, all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), a random access memory (Random Access Memory, RAM), or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

## Claims

1. A set-top box authentication method, comprising:
receiving, by a first set-top box, through a wireless communications network, identification information of a second set-top box, which is sent by the second set-top box;
searching, by the first set-top box, identification information of all set-top box information prestored in the first set-top box to determine whether a target set-top box consistent with the identification information of the second set-top box exists; and
when the target set-top box exists, confirming, by the first set-top box, that the authentication of the second set-top box is successful.

2. The set-top box authentication method according to claim 1, when the first set-top box is an auxiliary set-top box, further comprising:
sending, by the first set-top box, an authentication request message to the second set-top box so as to instruct the second set-top box to send the identification information of the second set-top box to the first set-top box.

3. The set-top box authentication method according to claim 1, wherein, when the first set-top box is a primary set-top box, the receiving, by a first set-top box, through a wireless communications network, identification information of a second set-top box, which is sent by the second set-top box comprises:
receiving, by the first set-top box, through a wireless network, an authentication request message sent by the second set-top box, wherein the authentication request message comprises the identification information of the second set-top box; and
when the target set-top box exists, the confirming that the authentication of the second set-top box is successful comprises:
sending, when the target set-top box exists, an authentication success message to the second set-top box to notify the second set-top box of successful authentication.

4. The set-top box authentication method according to claim 1, further comprising:
re-sending, by the first set-top box, the identification information to the second set-top box in a preset time period when the first set-top box is an auxiliary set-top box.

5. The set-top box authentication method according to claim 1, further comprising:
receiving, when the first set-top box is a primary set-top box, by the first set-top box, the identification information of the second set-top box in a preset time period, which is re-sent by the second set-top box.

6. The set-top box authentication method according to claim 1, further comprising:
sending, when the first set-top box is a primary set-top box and the target set-top box does not exist, by the first set-top box, an authentication failure message to the second set-top box; and
stopping working, by the first set-top box, when the first set-top box is an auxiliary set-top box and the target set-top box does not exist.

7. A set-top box, comprising:
a first receiving unit, configured to receive, through a wireless communications network, identification information of a second set-top box, which is sent by the second set-top box;
a searching unit, configured to search identification information of all set-top box information prestored in the first set-top box to determine whether a target set-top box consistent with the identification information of the second set-top box exists; and
a confirming unit, configured to: when the target set-top box exists, confirm that the authentication of the second set-top box is successful.

8. The set-top box according to claim 7, when the first set-top box is an auxiliary set-top box, further comprising:
an authentication request unit, configured to send an authentication request message to the second set-top box so as to instruct the second set-top box to send the identification information of the second set-top box to the first set-top box.

9. The set-top box according to claim 7, when the first set-top box is a primary set-top box, further comprising:
a second receiving unit, configured to receive, through a wireless network, an authentication request message sent by the second set-top box, wherein the authentication request message comprises the identification information of the second set-top box; and
a first sending unit, configured to send, when the target set-top box exists, an authentication success message to the second set-top box to notify the second set-top box of successful authentication.

10. The set-top box according to claim 7, further comprising:
a second sending unit, configured to re-send, by the first set-top box, the identification information to the second set-top box in a preset time period when the first set-top box is an auxiliary set-top box.

11. The set-top box according to claim 7, further comprising:
a third receiving unit, configured to receive, when the first set-top box is a primary set-top box, by the first set-top box, the identification information of the second set-top box in a preset time period, which is re-sent by the second set-top box.

12. The set-top box according to claim 7, further comprising:
a third sending unit, configured to send, when the first set-top box is a primary set-top box and the target set-top box does not exist, an authentication failure message to the second set-top box; and
a stopping unit, configured for the first set-top box to stop working when the first set-top box is an auxiliary set-top box and the target set-top box does not exist.
